# EUROPÄISCHE PATENTANMELDUNG

(11) **EP 1 562 358 A1**
(43) Veröffentlichungstag der Anmeldung: **10.08.2005**
(21) Anmeldenummer: 04090038.3
(22) Anmeldetag: 06.02.2004
(51) Int. Cl.: H04M 3/46, H04M 3/54

(54) **Verfahren zum Übernehmen eines Telefonanrufs**

(71) Anmelder: SIEMENS AKTIENGESELLSCHAFT, 80333 München (DE)
(72) Erfinder: Heiko, Gerber, 12683 Berlin (DE); Hagen, Robert, 12165 Berlin (DE)

(57) **Zusammenfassung**

Die Erfindung betrifft ein Verfahren zum Übernehmen eines Telefonanrufs in einem öffentlichen Telekommunikationsnetz (TKN), bei dem ein Ziel-Kommunikationsendgerät (B1) und mindestens ein Gruppen-Kommunikationsendgerät (B4) eine Gruppe (B) von Kommunikationsendgeräten bilden. Bei dem Verfahren wird auf eine zu Beginn des Telefonanrufs durch ein Anrufer-Kommunikationsendgerät (A) stattfindende Anwahl des Ziel-Kommunikationsendgerätes (B1) hin an dem Ziel-Kommunikationsendgerät ein Anrufsignal ausgegeben. An dem Gruppen-Kommunikationsendgerät (B4) wird ein Gruppenanrufsignal ausgegeben, welches die Anwahl des Ziel-Kommunikationsendgerätes (B1) beschreibt, und von einem Steuerungsknoten (SCP) des Telekommunikationsnetzes wird eine Signalisierungsnachricht (5) des Gruppen-Kommunikationsendgerätes (B4) empfangen, welche die Information enthält, dass der Telefonanruf von dem Gruppen-Kommunikationsendgerät (B4) übernommen werden soll. Daraufhin wird durch den Steuerungsknoten (SCP) der Telefonanruf von dem Ziel-Kommunikationsendgerät (B1) an das Gruppen-Kommunikationsendgerät (B4) übergeben.

## Beschreibung

Die Erfindung betrifft ein Verfahren zum Übernehmen eines Telefonanrufs in einem öffentlichen Telekommunikationsnetz.

Wenn durch ein an ein öffentliches Telekommunikationsnetz angeschlossenes Anrufer-Kommunikationsendgerät eine Anwahl eines Ziel-Kommunikationsendgerätes stattfindet, um einen Telefonanruf zwischen dem Anrufer-Kommunikationsendgerät und dem Ziel-Kommunikationsendgerät durchzuführen, dann kann der Fall auftreten, dass dieser Telefonanruf an dem Ziel-Kommunikationsendgerät nicht durch den gewünschten Gesprächspartner entgegengenommen wird (weil sich dieser beispielsweise nicht in der Nähe des Ziel-Kommunikationsendgerätes befindet). In so einem Fall ist es allgemein bekannt, dass der Telefonanruf auf einen Anrufbeantworter umgeschaltet wird. Dadurch erhält der Anrufer lediglich einen voraufgezeichneten Ansagetext vorgespielt und kann eine Nachricht für den gewünschten Kommunikationspartner hinterlassen. Ebenso ist es allgemein bekannt, dass das Ziel-Kommunikationsendgerät so konfiguriert sein kann, dass der Anruf von dem Ziel-Kommunikationsendgerät an ein vorgewähltes weiteres Kommunikationsendgerät weitergeleitet wird. Eine derartige Anrufweiterleitung wird auch als "call forwarding" bezeichnet. Wenn auch an diesem weiteren Kommunikationsendgerät der Anruf nicht entgegengenommen wird, dann kann dieser (z. B. nach einer vorbestimmten Zeit) zu einem dritten Kommunikationsendgerät weitergeleitet werden. Bei diesem Verfahren kann es ggf. zu sehr langen Rufaufbauzeiten kommen, was insbesondere für einen Benutzer des Anrufer-Kommunikationsendgerätes nicht zufriedenstellend ist.

Der Erfindung liegt die Aufgabe zugrunde, ein einfaches und leicht zu realisierendes Verfahren zum Behandeln von nicht entgegengenommenen Telefonanrufen anzugeben.

Diese Aufgabe wird erfindungsgemäß gelöst durch ein Verfahren zum Übernehmen eines Telefonanrufs in einem öffentlichen Telekommunikationsnetz, bei dem ein Ziel-Kommunikationsendgerät und mindestens ein Gruppen-Kommunikationsendgerät eine Gruppe von Kommunikationsendgeräten bilden, wobei bei dem Verfahren auf eine zu Beginn des Telefonanrufs durch ein Anrufer-Kommunikationsendgerät stattfindende Anwahl des Ziel-Kommunikationsendgerätes hin an dem Ziel-Kommunikationsendgerät ein Anrufsignal ausgegeben wird, an dem Gruppen-Kommunikationsendgerät ein Gruppenanrufsignal ausgegeben wird, welches die Anwahl des Ziel-Kommunikationsendgerätes beschreibt, von einem Steuerungsknoten des Telekommunikationsnetzes eine Signalisierungsnachricht des Gruppen-Kommunikationsendgerätes empfangen wird, welche die Information enthält, dass der Telefonanruf von dem Gruppen-Kommunikationsendgerät übernommen werden soll, und daraufhin durch den Steuerungsknoten der Telefonanruf von dem Ziel-Kommunikationsendgerät an das Gruppen-Kommunikationsendgerät übergeben wird. Hierbei ist insbesondere vorteilhaft, dass zeitlich parallel das Anrufsignal und das sich davon unterscheidende Gruppenanrufsignal ausgegeben wird, wobei durch das Gruppenanrufsignal die Nutzer der Gruppen-Kommunikationsendgeräte über den vorliegenden Telefonanruf für das Ziel-Kommunikationsendgerät informiert werden. Sobald von dem Steuerungsknoten die Signalisierungsnachricht empfangen wird, übergibt dieser daraufhin den Telefonanruf an das entsprechende Gruppen-Kommunikationsendgerät, wodurch der Telefonanruf an diesem Gruppen-Kommunikationsendgerät entgegennehmbar ist.

Das Verfahren kann so ablaufen, dass das Gruppen-Kommunikationsendgerät zur Ausgabe des Gruppenanrufsignals angeregt wird, indem von dem Steuerungsknoten eine Anregungsnachricht in Form eines USSD-Strings an das Gruppen-Kommunikationsendgerät gesendet wird. Dabei ist besonders vorteilhaft, dass sich dieses Verfahren in bereits existierenden öffentlichen Telekommunikationsnetzen (wie z. B. Mobilfunknetzen oder Telefonfestnetzen) problemlos durchführen lässt, da solche öffentliche Telekommunikationsnetze zur Übertragung von Nachrichten in Form von USSD-Strings eingerichtet sind.

Das erfindungsgemäße Verfahren kann so ablaufen, dass mit der Übergabe des Telefonanrufs an das Gruppen-Kommunikationsendgerät die Ausgabe des Anrufsignals an dem Ziel-Kommunikationsendgerät beendet wird.

Das Verfahren kann vorteilhafterweise so ablaufen, dass mit der Übergabe des Telefonanrufs an das Gruppen-Kommunikationsendgerät die Ausgabe des Gruppenanrufsignals an dem Gruppen-Kommunikationsendgerät beendet wird.

Das Verfahren kann auch so ablaufen, dass mit der Übergabe des Telefonanrufs an das Gruppen-Kommunikationsendgerät die Ausgabe von Gruppenanrufsignalen an allen Gruppen-Kommunikationsendgeräten der Gruppe beendet wird. Dadurch ist an dem einen Gruppen-Kommunikationsendgerät bzw. an allen weiteren Gruppen-Kommunikationsendgeräten erkennbar, dass der Telefonanruf erfolgreich übergeben wurde.

Das erfindungsgemäße Verfahren kann so ausgestaltet sein, dass durch den Steuerungsknoten als Signalisierungsnachricht ein USSD-String empfangen wird. Durch die Ausgestaltung der Signalisierungsnachricht als USSD-String lässt sich das erfindungsgemäße Verfahren vorteilhafterweise in bestehenden öffentlichen Kommunikationsnetzen einfach realisieren, beispielsweise in Mobilfunk- oder Festnetzen.

Das Verfahren kann aber auch so ablaufen, dass als Anregungsnachricht anstelle des USSD-Strings eine SIP-Nachricht an das Gruppen-Kommunikationsendgerät gesendet wird. Dies erlaubt es, die oftmals in öffentlichen Telekommunikationsnetzen bereits vorhandene Infrastruktur zur Übertragung von SIP-Nachrichten (SIP = Session Initiation Protocol) zur Realisierung des erfindungsgemäßen Verfahrens einzusetzen. Dadurch lässt sich das erfindungsgemäße Verfahren in besonders einfacher und kostengünstiger Weise realisieren.

Ebenso kann das erfindungsgemäße Verfahren so ausgestaltet sein, dass durch den Steuerungsknoten als Signalisierungsnachricht eine SIP-Nachricht empfangen wird.

Bei dem erfindungsgemäßen Verfahren kann an dem Ziel-Kommunikationsendgerät das Anrufsignal in Form mindestens eines akustischen Tons ausgegeben werden. Dabei kann das Anrufsignal in herkömmlicher Art und Weise durch einen "Klingelton" oder durch eine "Klingelmelodie" ausgegeben werden.

Das Verfahren kann so ablaufen, dass an dem mindestens einen Gruppen-Kommunikationsendgerät das Gruppenanrufsignal in Form eines optischen Signals ausgegeben wird. Dadurch kann das Gruppenanrufsignal deutlich von dem Anrufsignal in Form des mindestens eines akustischen Tons unterschieden werden.

Bei dem erfindungsgemäßen Verfahren kann der Steuerungsknoten von einem Dienstesteuerungspunkt des eine Struktur eines Intelligenten Netzes aufweisenden Telekommunikationsnetzes gebildet werden. Durch die Nutzung eines Dienstesteuerungspunktes eines an sich bekannten intelligenten Netzes lässt sich das erfindungsgemäße Verfahren besonders einfach und kostengünstig in bestehenden Telekommunikationsnetzen implementieren.

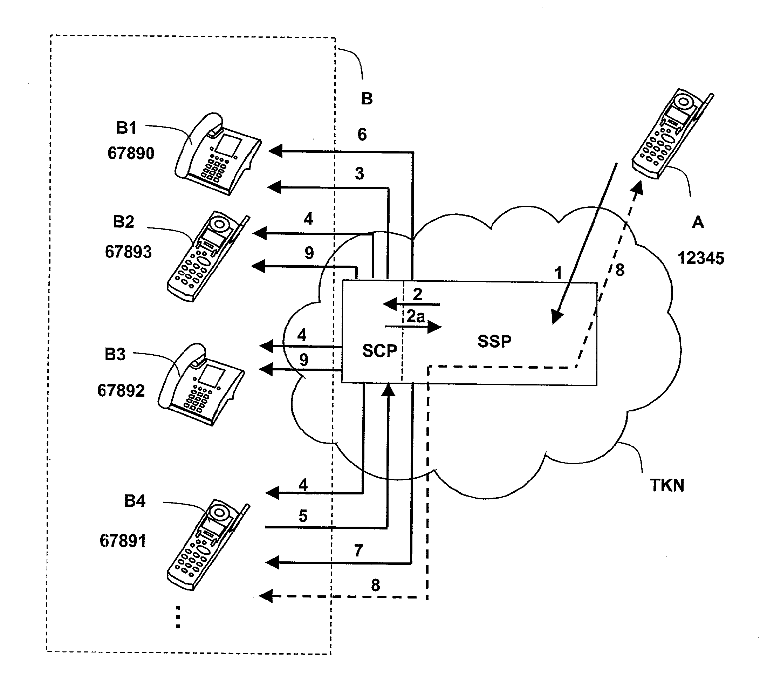

Im Folgenden wird die Erfindung anhand eines in der einzigen Figur dargestellten Ausführungsbeispiels näher erläutert. In der Figur ist ein beispielhafter Verfahrensablauf des erfindungsgemäßen Verfahrens dargestellt.

In der Figur ist schematisch ein öffentliches Telekommunikationsnetz TKN dargestellt, bei dem es sich im Ausführungsbeispiel um ein Mobilfunknetz (beispielsweise um ein GSM-Mobilfunknetz, GSM = Global System for Mobile Telecommunications) handelt. Das Telekommunikationsnetz TKN weist eine Struktur eines intelligenten Netzes IN (IN = Intelligent Network) auf. Von diesem intelligenten Netz ist in der Figur lediglich ein Steuerungsknoten in Form eines Dienstesteuerungspunktes SCP (SCP = Service Control Point) und ein Dienstevermittlungspunkt SSP (SSP = Service Switching Point) dargestellt. Der Dienstesteuerungspunkt SCP führt eine Dienstesteuerungsfunktion SCF durch (SCF = Service Control Function); der Dienstevermittlungspunkt SSP führt eine Dienstevermittlungsfunktion SSF durch (SSF = Service Switching Function). Derartige Dienstesteuerungspunkte und Dienstevermittlungspunkte an sich sind bekannt. In der Figur ist der Dienstesteuerungspunkt SCP und der Dienstevermittlungspunkt SSP schematisch als eine Einheit dargestellt.

Das Telekommunikationsnetz TKN ist mit einem Anrufer-Kommunikationsendgerät A in Form eines Mobiltelefons verbunden. Ebenso ist das Telekommunikationsnetz TKN mit einem Ziel-Kommunikations-Endgerät B1, einem Gruppen-Kommunikationsendgerät B4, einem weiteren Gruppen-Kommunikationsendgerät B3 und einem dritten Kommunikationsendgerät B2 verbunden. Bei dem Gruppen-Kommunikationsendgerät B4 und dem dritten Gruppen-Kommunikationsendgerät B2 handelt es sich um Mobiltelefone; das Ziel-Kommunikationsendgerät B1 und das weitere Gruppen-Kommunikationsendgerät B3 sind im Ausführungsbeispiel als Festnetztelefon ausgestaltet. Auch die Festnetztelefone B1 und B3 sind (ggf. unter Zwischenschaltung eines nicht dargestellten Telefonfestnetzes, beispielsweise eines ISDN-Telefonfestnetzes) mit dem Telekommunikationsnetz TKN verbunden.

Dem Anrufer-Kommunikationsendgerät A ist die Telefonnummer 12345 (in diesem Fall eine Mobilfunkrufnummer) zugeordnet. Dem Ziel-Kommunikationsendgerät B1 ist eine Telefonnummer 67890, dem Gruppen-Kommunikationsendgerät B4 eine Mobilfunkrufnummer 67891, dem weiteren Gruppen-Kommunikationsendgerät B3 eine Telefonnummer 67892 und dem dritten Gruppen-Kommunikationsendgerät B2 eine Mobiltelefonnummer 67893 zugeordnet.

Das Ziel-Kommunikationsendgerät B1, das Gruppen-Kommunikationsendgerät B4, das weitere Gruppen-Kommunikationsendgerät B3 und das dritte Gruppen-Kommunikationsendgerät B2 bilden eine Gruppe B von Kommunikationsendgeräten. Eine solche Gruppe B stellt eine Anrufübernahmegruppe dar. Endgeräte diese Gruppe können an andere Endgeräte dieser Gruppe gerichtete Telefonanrufe übernehmen. Die Gruppierung (Zusammenfassung) der Endgeräte B1 bis B4 zu der Gruppe B erfolgt durch einen Eintrag der Telefonnummern der Endgeräte B1 bis B4 dieser Gruppe in einen Datenspeicher des Steuerungsknotens SCP.

Im Folgenden wird beispielhaft ein Verfahren zum Übernehmen eines Telefonanrufs in dem Telekommunikationsnetz TKN beschrieben. Zu Beginn dieses Verfahrens wird durch das Anrufer-Kommunikationsendgerät A eine Anwahl der Rufnummer "67890" des Ziel-Kommunikationsendgerätes B1 durchgeführt. Daraufhin wird ein sogenannter "Call Attempt" 1 von dem Anrufer-Kommunikationsendgerät A an den Dienstevermittlungspunkt SSP des Telekommunikationsnetzes TKN übertragen. Der Dienstevermittlungspunkt SSP erkennt in bekannter Weise, das ein Anruf zu dem Ziel-Kommunikationsendgerät B1 aufgebaut werden soll und dass das Ziel-Kommunikationsendgerät B1 an dem Verfahren zum Übernehmen eines Telefonanrufs in dem Telekommunikationsnetz teilnimmt. Daraufhin sendet der Dienstevermittlungspunkt SSP eine Nachricht 2 ("Initial Detection Point") an den Dienstesteuerungspunkt SCP. Dadurch wird der "Call Attempt" an den Dienststeuerungspunkt SCP weitergeleitet. Der Dienstesteuerungspunkt SCP sendet daraufhin eine Nachricht 2a ("Connect") an den Dienstevermittlungspunkt SSP zurück. Daraufhin wird der Telefonanruf zu dem Ziel-Kommunikationsendgerät B1 weitergeleitet (Pfeil 3); an diesem Ziel-Kommunikationsendgerät B1 wird ein Anrufsignal in Form mindestens eines akustischen Tons ausgegeben (das Ziel-Kommunikationsendgerät B1 "klingelt"). Nahezu gleichzeitig sendet der Steuerungsknoten SCP eine Anregungsnachricht 4 in Form eines USSD-Strings jeweils an das Gruppen-Kommunikationsendgerät B4 und auch an das weitere Gruppen-Kommunikationsendgerät B3 und das dritte Gruppen-Kommunikationsgerät B2 (Pfeile 4). Daraufhin wird von dem Gruppen-Kommunikationsendgerät B4 ein Gruppen-Anrufsignal ausgegeben, welches die Anwahl des Ziel-Kommunikationsendgerätes beschreibt. Dieses Cruppen-Anrufsignal wird in Form eines optischen Signals ausgegeben, indem auf einer Anzeigeeinheit des Gruppen-Kommunikationsendgerätes B4 die Anzeige ausgegeben wird: "12345 ruft 67890" (oder "12345 ruft Gruppenmitglied B1"). Gleichartige Gruppen-Anrufsignale werden auch auf Anzeigeeinheiten des weiteren Gruppen-Kommunikationsendgerätes B3 und des dritten Gruppen-Kommunikationsendgerätes B2 ausgegeben. Durch diese Gruppen-Anrufsignale wird ein Nutzer des Gruppen-Kommunikationsendgerätes B4 und auch ggf. ein weiterer Nutzer des weiteren Gruppen-Kommunikationsendgerätes B3 und/oder ein Nutzer des dritten Gruppen-Kommunikationsendgerätes B2 darüber informiert, dass ein Telefonanruf für das Ziel-Kommunikationsendgerät B1 vorliegt. Bei gewünschter Übernahme dieses Telefonanrufs durch den Nutzer des Gruppen-Kommunikationsendgerätes B4 betätigt dieser Nutzer ein entsprechendes Betätigungselement (z. B. eine Taste der Tastatur) des Gruppen-Kommunikationsendgerätes B4. Alternativ kann das Gruppen-Kommunikationsendgerät B4 jedoch auch so ausgestaltet sein, dass es (beispielsweise während bestimmter Zeitspannen, z. B. täglich zwischen 12 Uhr und 13 Uhr) automatisch alle an das Ziel-Kommunikationsendgerät B1 gerichtete Telefonanrufe übernimmt.

Zur Übernahme des an das Ziel-Kommunikationsendgerät B1 gerichteten Telefonanrufs sendet das Gruppen-Kommunikationsendgerät B4 eine Signalisierungsnachricht 5 in Form eines USSD-Strings an den Steuerungsknoten SCP. Der Steuerungsknoten empfängt diese Signalisierungsnachricht 5 und erhält damit die Information, dass der ursprünglich an das Ziel-Kommunikationsendgerät B1 gerichtete Telefonanruf von dem Gruppen-Kommunikationsendgerät B4 übernommen werden soll. Als eine derartige Signalisierungsnachricht 5 können beispielsweise die Nachrichten "Unstructured SS Request Ack" oder "Process Unstructured SS Data Message" verwendet werden. Daraufhin übergibt der Steuerungsknoten den Telefonanruf von dem Ziel-Kommunikationsendgerät B1 an das Gruppen-Kommunikationsendgerät B4. Dies geschieht, indem der Steuerungsknoten SCP durch Senden einer Nachricht 6 ("Cancel") den noch aktiven, an das Ziel-Kommunikationsendgerät B1 betreffenden "Call Attempt" beendet. Daraufhin wird die Ausgabe des Anrufsignals an dem Ziel-Kommunikationsendgerät B1 beendet, das Ziel-Kommunikationsendgerät B1 hört auf zu "klingeln". Daraufhin sendet der Steuerungsknoten SCP eine Nachricht "Connect" oder eine Nachricht "InitiateCallAttempt" an den Dienstevermittlungspunkt SSP. Daraufhin wird ein weiterer "Call Attempt" zu dem Gruppen-Kommunikationsendgerät B4 aufgebaut (Pfeil 7) und an dem Gruppen-Kommunikationsendgerät B4 wird in herkömmlicher Weise ein Anrufsignal ausgegeben (das Gruppen-Kommunikationsendgerät B4 "klingelt"). Damit ist der Telefonanruf von dem Ziel-Kommunikationsendgerät B1 an das Gruppen-Kommunikationsendgerät B4 übergeben bzw. durch das Gruppen-Kommunikationsendgerät B4 von dem Ziel-Kommunikationsendgerät B1 übernommen worden. Sobald ein Nutzer des Gruppen-Kommunikationsendgerätes B4 den Telefonanruf entgegennimmt (indem er die entsprechende Taste des Mobil-Telefons B4 betätigt bzw. bei einem leitungsgebundenen Telefon den Hörer abnimmt), wird er durch den Steuerungsknoten SCP über den Dienstevermittlungspunkt SSP mit dem Anrufer-Kommunikationsendgerät A verbunden (Pfeil 8). Der Steuerungsknoten SCP sendet nun einen weiteren USSD-String an das Gruppen-Kommunikationsendgerät B4, an das weitere Gruppen-Kommunikationsendgerät B3 und an das dritte Gruppen-Kommunikationsendgerät B2 und veranlasst damit diese Gruppen-Kommunikationsendgeräte B4, B3 und B2, die Ausgabe des Gruppen-Anrufsignals zu beenden. Als ein solcher weiterer USSD-String kann z.B. ein sog. "leerer" USSD-String verwendet werden, also eine USSD-String-Nachricht, die keine mit dem Gruppen-Anrufsignal auszugebenden Informationen enthält. Daraufhin wird jeweils die Anzeige auf der Anzeigeeinheit des Gruppen-Kommunikationsendgeräts B4, des weiteren Gruppen-Kommunikationsendgeräts B3 und des dritten Gruppen-Kommunikationsendgeräts B2 gelöscht und damit die Ausgabe des Gruppen-Anrufsignals beendet.

In einem weiteren Ausführungsbeispiel kann als Anregungsnachricht anstelle des USSD-Strings auch eine nach dem Kommunikationsprotokoll SIP aufgebaute SIP-Nachricht an das Gruppen-Kommunikationsendgerät gesendet werden (SIP = Session Initiation Protocol). Ebenso kann durch den Steuerungsknoten als Signalisierungsnachricht eine SIP-Nachricht von den Gruppen-Kommunikationsendgeräten empfangen werden. Als derartige SIP-Nachrichten können beispielsweise SIP-Nachrichten des Typs "SIP 200 OK" verwendet werden. Als Steuerungsknoten kann in diesem Fall ein SIP-Applikation-Server dienen.

Es wurde ein Verfahren beschrieben, mit dem Telefonanrufe in öffentlichen Telefonfestnetzen, in Mobilfunknetzen und auch in konvergenten Telekommunikationsnetzen mit Mobilfunk- und Festnetzfunktionalität übernommen werden können. Eine derartige Übernahme von Telefonanrufen kann z. B. bei IN-Diensten, wie "Virtual Private Network" (VPN), genutzt werden. Dabei können folgende Beispiele auftreten:
- Mehrere Kommunikationsendgeräte in einem Mobilfunk-VPN (z. B. alle Kommunikationsendgeräte einer Dienstelle eines Unternehmens) sind zu einer Anrufübernahmegruppe B zusammengefasst. Sobald ein Anruf für irgendeines der Kommunikationsendgeräte dieser Gruppe eingeht, wird an allen anderen Kommunikationsendgeräten dieser Gruppe ein Gruppenanrufsignal ausgegeben. Der Anruf kann dann von allen Kommunikationsendgeräten der Gruppe B entgegengenommen werden.
- Solche Kommunikationsendgeräte eines konvergenten Festnetz/Mobilfunk-VPNs, die z. B. den Innendienst- oder den Außendienstmitarbeitern einer Dienststelle zugeordnet sind, werden zu der Anrufübernahmegruppe B zusammengefasst. An allen diesen Kommunikationsendgeräten wird eine Information über einen eingehenden Anruf für sämtliche Gruppenmitglieder ausgegeben (als Anrufsignal bzw. als Gruppen-Anrufsignal). Daraufhin kann von jedem Kommunikationsendgerät der Gruppe B dieser Anruf übernommen werden.
- Einem Kommunikationsteilnehmer eines konvergenten Festnetz/Mobilfunk-Dienstes sind mehrere separate Festnetz- und Mobilfunkanschlüsse und die entsprechenden Kommunikationsendgeräte zugeordnet. Die an diesen Anschlüssen angeschlossenen Kommunikationsendgeräte bilden die Gruppe B von Kommunikationsendgeräten. Ein an eines dieser Kommunikationsendgeräte gerichteter Telefonanruf kann an allen Kommunikationsendgeräten der Gruppe entgegengenommen werden. Beispielsweise kann ein Anruf, der ursprünglich an den Festnetzapparat im Büro des Teilnehmers gerichtet war, über den Mobilfunkapparat entgegengenommen werden (wenn sich der Teilnehmer z.B. nicht in der Nähe des Festnetzapparates befindet).

## Patentansprüche

1. Verfahren zum Übernehmen eines Telefonanrufs in einem öffentlichen Telekommunikationsnetz (TKN), bei dem ein Ziel-Kommunikationsendgerät (B1) und mindestens ein Gruppen-Kommunikationsendgerät (B4) eine Gruppe (B) von Kommunikationsendgeräten bilden, wobei bei dem Verfahren
- auf eine zu Beginn des Telefonanrufs durch ein Anrufer-Kommunikationsendgerät (A) stattfindende Anwahl des Ziel-Kommunikationsendgerätes (B1) hin an dem Ziel-Kommunikationsendgerät (B1) ein Anrufsignal ausgegeben wird,
- an dem Gruppen-Kommunikationsendgerät (B4) ein Gruppenanrufsignal ausgegeben wird, welches die Anwahl des Ziel-Kommunikationsendgerätes (B1) beschreibt,
- von einem Steuerungsknoten (SCP) des Telekommunikationsnetzes (TKN) eine Signalisierungsnachricht (5) des Gruppen-Kommunikationsendgerätes (B4) empfangen wird, welche die Information enthält, dass der Telefonanruf von dem Gruppen-Kommunikationsendgerät (B4) übernommen werden soll, und
- daraufhin durch den Steuerungsknoten (SCP) der Telefonanruf von dem Ziel-Kommunikationsendgerät (B1) an das Gruppen-Kommunikationsendgerät (B4) übergeben wird.

2. Verfahren nach Anspruch 1,
**dadurch gekennzeichnet, dass**
- das Gruppen-Kommunikationsendgerät (B4) zur Ausgabe des Gruppenanrufsignals angeregt wird, indem von dem Steuerungsknoten (SCP) eine Anregungsnachricht (4) in Form eines USSD-Strings an das Gruppen-Kommunikationsendgerät (B4) gesendet wird.

3. Verfahren nach Anspruch 1 oder 2,
**dadurch gekennzeichnet, dass**
- mit der Übergabe des Telefonanrufs an das Gruppen-Kommunikationsendgerät (B4) die Ausgabe des Anrufsignals an dem Ziel-Kommunikationsendgerät (B1) beendet wird.

4. Verfahren nach einem der vorhergehenden Ansprüche,
**dadurch gekennzeichnet, dass**
- mit der Übergabe des Telefonanrufs an das Gruppen-Kommunikationsendgerät (B4) die Ausgabe des Gruppenanrufsignals an dem Gruppen-Kommunikationsendgerät (B4) beendet wird.

5. Verfahren nach einem der vorhergehenden Ansprüche,
**dadurch gekennzeichnet, dass**
- mit der Übergabe des Telefonanrufs an das Gruppen-Kommunikationsendgerät (B4) die Ausgabe von Gruppenanrufsignalen an allen Gruppen-Kommunikationsendgeräten (B2,B3,B4) der Gruppe (B) beendet wird.

6. Verfahren nach einem der vorhergehenden Ansprüche,
**dadurch gekennzeichnet, dass**
- durch den Steuerungsknoten (SCP) als Signalisierungsnachricht (5) ein USSD-String empfangen wird.

7. Verfahren nach einem der Ansprüche 2 bis 5,
**dadurch gekennzeichnet, dass**
- als Anregungsnachricht (4) anstelle des USSD-Strings eine SIP-Nachricht an das Gruppen-Kommunikationsendgerät (B4) gesendet wird.

8. Verfahren nach einem der Ansprüche 1 bis 5 oder 7,
**dadurch gekennzeichnet, dass**
- durch den Steuerungsknoten (SCP) als Signalisierungsnachricht (5) eine SIP-Nachricht empfangen wird.

9. Verfahren nach einem der vorhergehenden Ansprüche,
**dadurch gekennzeichnet, dass**
- an dem Ziel-Kommunikationsendgerät (B1) das Anrufsignal in Form mindestens eines akustischen Tons ausgegeben wird.

10. Verfahren nach einem der vorhergehenden Ansprüche,
**dadurch gekennzeichnet, dass**
- an dem mindestens einen Gruppen-Kommunikationsendgerät (B4) das Gruppenanrufsignal in Form eines optischen Signals ausgegeben wird.

11. Verfahren nach einem der vorhergehenden Ansprüche,
**dadurch gekennzeichnet, dass**
- der Steuerungsknoten (SCP) von einem Dienstesteuerungspunkt des eine Struktur eines Intelligenten Netzes aufweisenden Telekommunikationsnetzes (TKN) gebildet wird.
